# FASCICULE DE BREVET EUROPEEN

(11) **EP 4 363 536 B1**
(45) Date de publication et mention de la délivrance du brevet: **21.05.2025**
(21) Numéro de dépôt: 22741246.7
(22) Date de dépôt: 30.06.2022
(51) Int. Cl.: C10M 173/02, C10N 30/06, C10N 40/20

(54) **COMPOSITION LUBRIFIANTE AQUEUSE POUR LE TRAVAIL DES MÉTAUX**
WÄSSRIGE SCHMIERMITTELZUSAMMENSETZUNG FÜR DIE METALLBEARBEITUNG
AQUEOUS LUBRICANT COMPOSITION FOR METALWORKING

(30) Priorité: 01.07.2021 FR 2107130
(43) Date de publication de la demande: 08.05.2024
(73) Titulaire: TotalEnergies OneTech, 92400 Courbevoie (FR)
(72) Inventeur: VERROUL, Véronique, 69360 Solaize (FR); FRELECHOUX, Richard, 69360 Solaize (FR)
(74) Mandataire: Cabinet Nony
(86) Numéro de dépôt international: PCT/EP2022/068164
(87) Numéro de publication internationale: WO 2023/275300

(56) Documents cités:
- EP-A1- 3 124 583
- EP-A2- 0 911 383
- WO-A1-97/46606
- CN-A- 111 117 756

## Description

### Domaine technique

La présente invention concerne le domaine des compositions lubrifiantes, et plus particulièrement des compositions lubrifiantes mises en œuvre dans les procédés de travail des métaux, telles que les opérations d'usinage de pièces métalliques. En particulier, la présente invention concerne des compositions lubrifiantes à base aqueuse.

### Technique antérieure

Les compositions lubrifiantes, dites encore « lubrifiants » sont couramment mises en œuvre dans des systèmes mécaniques, pour réduire les frottements entre les pièces et ainsi les protéger contre l'usure. Outre les phénomènes d'usure, les frottements peuvent s'opposer au mouvement relatif des pièces en contact et induire des pertes d'énergie préjudiciables à un fonctionnement optimal du système mécanique.

Les lubrifiants sont mis en œuvre pour de multiples applications, de la lubrification de moteurs de véhicule à combustion à la lubrification de machines mises en œuvre pour des opérations d'usinage, ce que l'on appelle dans le langage courant le travail des métaux, notamment pour des opérations de déformation de métaux.

Le travail des métaux correspond plus généralement à la mise en œuvre de procédés mécaniques ou métallurgiques, à la fois diversifiés ou plus spécialisés, qui peuvent être définis comme des procédés de conformation, de découpe ou de jointage. Cela peut également concerner toute transformation mécanique du métal, telle que l'usinage (tournage, fraisage, perçage, sciage, filetage entre autres), le formage, la découpe, l'estampage, ou encore le laminage.

Les opérations relatives au travail des métaux nécessitent tout particulièrement la mise en œuvre de compositions lubrifiantes, dans le but de réduire les forces de friction entre les parties en métal en contact et de prévenir leur usure prématurée, tout en garantissant avantageusement un refroidissement de ces dernières.

Ces compositions lubrifiantes, dédiées à la lubrification dans des procédés d'usinage des métaux, sont également couramment désignées sous les dénominations « compositions ou fluides de travail des métaux », « lubrifiants ou fluides d'usinage » ou encore « lubrifiants ou fluides de coupe ».

Classiquement, les formulations lubrifiantes mises en œuvre dans de telles opérations d'usinage sont des lubrifiants composés majoritairement d'une ou plusieurs huiles de base, auxquelles sont généralement associés des additifs dédiés à stimuler les performances lubrifiantes des huiles de base, comme par exemple des additifs modificateurs de frottement. D'une manière générale, ces formulations lubrifiantes sont classées au regard du type d'huile qu'elles intègrent. Ainsi :
- Les fluides minéraux, non-renouvelables, sont ceux comprenant des huiles minérales, telles que les huiles paraffiniques, aromatiques ou naphténiques, dans leur formulation de base ;
- Les fluides renouvelables, d'origine végétale ou animale, sont ceux comprenant des huiles végétales, animales ou des graisses dans leur formulation de base ;
- Les fluides minéraux d'origine synthétique sont ceux comprenant des huiles minérales ou des dérivés pétrochimiques chimiquement modifiés, dans leur formulation de base comme, par exemple, des polyalphaoléfines, des polyalkylène glycols et des huiles minérales hydrogénées ;
- Les fluides renouvelables d'origine synthétique sont ceux comprenant des huiles végétales ou animales chimiquement modifiées, dans leur formulation de base comme, par exemple, des esters d'huiles végétales, des huiles végétales sulfitées, oxydées, estérifiées, ou encore des huiles animales sulfatées.

Certaines formulations, dites mixtes, comprennent un mélange des huiles listées ci-dessus dans leur formulation de base. Les plus connues sont appelées les huiles semi-synthétiques et correspondent à un mélange d'huiles synthétiques et minérales.

Cependant, l'utilisation d'huiles ou de graisses dans des compositions lubrifiantes pour travail des métaux présentent plusieurs désavantages. En particulier, les lubrifiants à base huileuse présentent généralement une faible résistance aux attaques microbiennes, de faibles propriétés de refroidissement ou encore un impact négatif sur l'environnement de travail, la santé ou encore la sécurité.

Des lubrifiants sous forme d'émulsion, comprenant une phase aqueuse ajoutée à une phase huileuse, ont ainsi été développés. Cependant, ces lubrifiants présentent une faible stabilité en partie due à la dureté de l'eau et/ou à la salinité.

Dans le but de résoudre les problèmes liés à la mise en œuvre de formulations lubrifiantes à base d'huile dans des applications pour travail des métaux, des compositions à base d'eau ont montré un certain intérêt. Ces formulations comprennent généralement de l'eau, supplémentée par divers additifs afin de garantir les propriétés tribologiques requises pour les lubrifiants, en particulier en termes de réduction du frottement et de protection des pièces contre l'usure.

A titre d'exemples, on peut ainsi citer les documents WO 2009/106359 et WO 2012/163550 qui décrivent des compositions lubrifiantes aqueuses comprenant notamment de l'eau et des sels de carboxyméthylcellulose.

On peut également citer le document EP 3 042 946 qui propose un fluide de travail des métaux, exempt d'huile et d'émulsifiant, comprenant entre 0,1 et 2 % en poids d'un polymère de type cellulosique.

Enfin, le document GB 1 272 100 propose un lubrifiant aqueux pour le travail des métaux comprenant (1) un polypropylène glycol linéaire ou un copolymère oxyde d'éthylène/oxyde de propylène de masse moléculaire comprise entre 2 000 et 9 000 Da, et (2) une polyvinyle pyrrolidone, un éther de cellulose ou un phosphate de triéthanolamine.

Le document EP 3 124 583 A1 concerne un fluide hydrosoluble pour le travail des métaux présentant d'excellentes propriétés de lubrification et de résistance à l'usure, même dans des conditions d'usinage sévères. Malheureusement, la mise en œuvre de lubrifiants aqueux pour une application dans le travail des métaux présente un désavantage majeur lié à la formation de ce que l'on nomme des « résidus gommeux ».

Ces résidus gommeux apparaissent postérieurement aux opérations d'usinage. Une fois l'appareillage d'usinage à l'arrêt, le lubrifiant, soumis à une déshydratation ambiante, est susceptible de conduire à la formation de sels qui, combinés aux polymères présents au niveau du lubrifiant, peuvent former des résidus relativement visqueux et insolubles en phase aqueuse, désignés sous la dénomination « résidus gommeux »

Les résidus gommeux adhèrent sur les parois de l'outillage, et sont susceptibles d'engendrer un blocage de l'outil d'usinage, nécessitant généralement des opérations indésirables de maintenance sur la machine.

Ainsi, il demeure un besoin de disposer d'une composition lubrifiante aqueuse, pour le travail des métaux, engendrant peu ou pas de résidus gommeux, tout en maintenant, voire en améliorant, les propriétés tribologiques du lubrifiant, notamment en termes de propriétés anti-usure et extrême-pression.

La présente invention vise précisément à répondre à ce besoin.

### Exposé de l'invention

La présente invention propose ainsi une nouvelle composition lubrifiante aqueuse présentant des propriétés tribologiques, en particulier extrême-pression et anti-usure, adaptées à sa mise en œuvre pour le travail des métaux, et conduisant à une faible formation, voire à l'absence de résidus gommeux après son utilisation au niveau de l'appareillage d'usinage.

Il est ainsi décrit une composition lubrifiante aqueuse, en particulier pour le travail des métaux, comprenant au moins :
- de l'eau, entre 60 % et 75 % massique, de préférence de l'eau osmosée ;
- de 0,001 à 80 % massique d'au moins un polyalkylène glycol ; et
- de 0,001 à 50 % massique d'au moins un polysaccharide à galactomannane, les pourcentages étant exprimés par rapport à la masse totale de la composition.

L'invention concerne, selon un premier de ses aspects, une composition lubrifiante aqueuse, en particulier pour le travail des métaux, comprenant au moins :
- de l'eau, entre 60 % et 75 % massique, de préférence de l'eau osmosée ;
- de 0,1 % à 15 % massique d'au moins un polyalkylène glycol soluble dans l'eau ; et
- de 0,1 % à 5 % massique d'au moins un polysaccharide à galactomannane, les pourcentages étant exprimés par rapport à la masse totale de la composition.

Par « composition aqueuse » au sens de la présente invention, on entend désigner une composition comprenant de l'eau à titre de fluide de base, autrement dit à titre de solvant majoritaire. En particulier, l'eau, de préférence osmosée, représente de préférence au moins 50 % massique de la masse totale de la composition lubrifiante.

Dans la suite du texte, on désignera par « composition lubrifiante aqueuse » ou « lubrifiant aqueux », une composition lubrifiante selon l'invention.

Par « eau osmosée » au sens de la présente invention, on entend désigner une eau ayant subi une purification, notamment par un procédé d'osmose inverse, afin de réduire la teneur en composés organiques et/ou minéraux, par exemple à une teneur inférieure à 5,0 % en poids, de préférence inférieure à 1,0 % en poids. Dans la suite du texte, les expressions « eau déminéralisée » ou encore « eau ultrapure » seront considérées comme équivalentes ou synonymes de l'expression « eau osmosée ». En particulier, l'eau osmosée peut être une « eau déionisée », autrement dit une eau ayant subi une purification afin de réduire la teneur en ions, tels que les ions Ca²⁺ et HCO₃⁻ généralement présents dans l'eau. De préférence une eau déionisée ne comprend pas d'ions.

Contre toute attente, les inventeurs ont découvert que la mise en œuvre combinée d'au moins un polyalkylène glycol et d'au moins un polysaccharide à galactomannane permet d'accéder à un fluide aqueux présentant d'excellentes propriétés tribologiques, adaptées à sa mise en œuvre comme lubrifiant pour le travail des métaux, tout en conduisant à une très faible formation de résidus gommeux après usage.

Ainsi, comme illustré dans les exemples qui suivent, il est possible, en supplémentant une formulation lubrifiante aqueuse contenant au moins un polyalkylène glycol, par au moins un polysaccharide à galactomannane, en particulier de type gomme de guar, d'accéder à un fluide lubrifiant conduisant à une formation de résidus gommeux significativement réduite. La propension d'une formulation lubrifiante à former des résidus gommeux peut être évaluée comme décrit dans les exemples qui suivent.

Il est également décrit l'utilisation de la combinaison d'au moins un polyalkylène glycol et d'au moins un polysaccharide à galactomannane, en particulier choisi parmi la gomme de guar et ses dérivés, dans une composition lubrifiante aqueuse, pour réduire sa propension à former des résidus gommeux après sa mise en œuvre comme lubrifiant pour le travail des métaux.

L'invention concerne ainsi l'utilisation de la combinaison d'au moins un polyalkylène glycol soluble dans l'eau et d'au moins un polysaccharide à galactomannane, en particulier choisi parmi la gomme de guar et ses dérivés, dans une composition lubrifiante aqueuse, pour réduire sa propension à former des résidus gommeux après sa mise en œuvre comme lubrifiant pour le travail des métaux.

Par ailleurs, la combinaison d'au moins un polysaccharide à galactomannane n'impacte pas les propriétés tribologiques de la formulation lubrifiante, en particulier les performances de réductions des frottements, dans les conditions d'extrême-pression.

La composition lubrifiante aqueuse selon l'invention présente ainsi de bonnes propriétés anti-usure et extrême-pression, voire même, de manière surprenante, des propriétés anti-usure et/ou extrême-pression améliorées comparativement à une composition ne comprenant pas de polysaccharide à galactomannane selon l'invention.

Les propriétés anti-usure et extrême-pression peuvent être évaluées par un test 4 billes extrême-pression, en particulier selon la norme ASTM D2783, tel que détaillé dans les exemples ci-après. Comme démontré dans les exemples, une composition lubrifiante aqueuse selon l'invention atteint des valeurs de charge de soudure élevées, sans augmentation significative du diamètre d'usure, ce qui témoigne de ses excellentes propriétés tribologiques.

Ainsi, les compositions aqueuses selon l'invention s'avèrent particulièrement avantageuses pour une mise en œuvre en tant que lubrifiants pour le travail des métaux. Elles peuvent ainsi être employées à titre de fluides de travail des métaux, pour diverses applications, en substitution des lubrifiants conventionnellement mis en œuvre, notamment des lubrifiants hydrocarbonés.

L'invention concerne ainsi, selon un autre de ses aspects, l'utilisation d'une composition lubrifiante aqueuse selon l'invention, à titre de lubrifiant dans un procédé de travail des métaux.

Une composition aqueuse selon l'invention peut être plus particulièrement mise en œuvre à titre de lubrifiant dans toute opération d'usinage des métaux, par exemple dans des procédés de conformation, de découpe, de jointage ou toute autre transformation du métal telle que le formage, l'estampage, le laminage, etc.

Elle peut être destinée à être mise en œuvre pour le travail de métaux variés, tels que l'aluminium, l'acier, l'acier galvanisé ou encore les métaux jaunes.

L'invention concerne encore un procédé pour le travail des métaux mettant en œuvre, à titre de lubrifiant, une composition aqueuse lubrifiante selon l'invention. Ledit procédé comprend en particulier une étape d'application d'une composition aqueuse lubrifiante selon l'invention à la surface d'au moins une partie de l'outil (ou appareillage) d'usinage et/ou d'une pièce à usiner en métal.

Le fluide lubrifiant selon l'invention permet avantageusement de réduire les frictions entre l'outil ou l'appareillage d'usinage et la pièce métallique usinée.

La présente invention concerne également l'utilisation d'une composition lubrifiante aqueuse selon l'invention pour réduire, voire prévenir (éviter), la formation de résidus gommeux après une opération d'usinage de métaux faisant intervenir ladite composition à titre de fluide lubrifiant.

Elle concerne plus particulièrement l'utilisation d'une composition lubrifiante aqueuse selon l'invention pour réduire les frottements au cours d'une opération d'usinage des métaux, en particulier les frottements entre l'outil d'usinage et la pièce métallique, ainsi que pour réduire, voire prévenir, l'apparition de résidus gommeux après une opération d'usinage de métaux faisant intervenir ladite composition à titre de fluide lubrifiant.

L'invention concerne encore, selon un autre de ses aspects, un procédé de lubrification de l'outil (ou appareillage) mis en œuvre pour une opération d'usinage de métaux et/ou d'une pièce à usiner en métal, comprenant au moins une étape de mise en contact d'une partie de la surface dudit outil et/ou de ladite pièce, avec au moins une composition lubrifiante aqueuse selon l'invention.

Enfin, de manière avantageuse, une composition lubrifiante selon l'invention, formée majoritairement d'eau, présente peu d'impact toxicologique notamment pour les personnes mettant en œuvre ce lubrifiant. De façon avantageuse, quand bien même l'eau est le solvant majoritaire d'un lubrifiant aqueux selon l'invention, la surface traitée est correctement lubrifiée.

De plus, la présence d'une proportion importante en eau permet de faciliter le nettoyage des surfaces métalliques et l'élimination du lubrifiant après usinage, notamment par simple passage ou rinçage à l'eau.

D'autres caractéristiques, variantes et avantages d'une composition lubrifiante aqueuse selon l'invention ressortiront mieux à la lecture de la description et des exemples qui suivent, donnés à titre illustratif et non limitatif de l'invention.

Les expressions « compris entre ... et ... », « allant de ... à ... », « formé de ... à ... », et « variant de ... à ... », doivent se comprendre bornes incluses, sauf mention contraire.

Dans la description et les exemples, sauf indication contraire, les pourcentages sont des pourcentages pondéraux. Les pourcentages sont donc exprimés en masse par rapport à la masse totale de la composition. La température est exprimée en degré Celsius sauf indication contraire, et la pression est la pression atmosphérique, sauf indication contraire.

### Description détaillée

### COMPOSITION AQUEUSE

Comme évoqué précédemment, une composition lubrifiante aqueuse selon l'invention, dite encore lubrifiant aqueux, est une formulation comprenant de l'eau à titre de solvant majoritaire.

Au sens de l'invention, par « solvant majoritaire » on entend signifier que l'eau est présente en plus grande quantité que tout autre solvant éventuellement présent dans la composition.

Une composition lubrifiante aqueuse selon l'invention comprend entre 60 % et 75 % massique d'eau, en particulier d'eau osmosée, par rapport à la masse totale de la composition.

Par son rôle de solvant, l'eau permet de solubiliser le ou les polyalkylènes glycols et le ou lesdits polysaccharides à galactomannane mis en œuvre selon l'invention, ainsi que tout additif optionnellement présent dans la composition, en particulier choisi parmi ceux détaillés dans la suite du texte.

De manière avantageuse, outre son rôle de solvant, l'eau permet d'accéder à une composition lubrifiante présentant de bonnes propriétés de refroidissement, utiles dans le domaine de l'usinage des métaux.

Selon un mode de réalisation particulier, l'eau mise en œuvre dans une composition lubrifiante aqueuse selon l'invention est de l'eau déionisée.

Avantageusement, une eau déionisée ne comprend pas d'ions, tels que les ions Ca²⁺ et HCO₃⁻ généralement présents dans l'eau, qui sont responsables de la conduction de l'électricité dans l'eau.

La mise en œuvre d'une eau déionisée est donc particulièrement avantageuse dans le cadre de l'utilisation du lubrifiant aqueux selon l'invention pour des applications requérant un fluide conduisant peu, voire pas du tout, l'électricité.

Une composition lubrifiante aqueuse selon l'invention se différencie des lubrifiants hydrocarbonés, qui comprennent une proportion majoritaire d'une ou plusieurs huiles de base non solubles dans l'eau.

Par « huile non soluble dans l'eau », on entend notamment désigner une huile qui ne se dissout substantiellement pas dans l'eau à température ambiante (à environ 25 °C). En particulier, une huile non soluble dans l'eau présente une solubilité dans l'eau inférieure à 0,2 g/L, à température ambiante.

Il s'agit notamment des huiles de bases lubrifiantes appartenant aux groupes I à V selon les classes définies dans la classification API (ou leurs équivalents selon la classification ATIEL) et leurs mélanges.

De préférence, une composition lubrifiante aqueuse selon la présente invention comprend moins de 20 % massique d'huile(s) de base non soluble(s) dans l'eau, de préférence moins de 10 % massique, en particulier moins de 5 % massique, par rapport à la masse totale de la composition.

Avantageusement, une composition lubrifiante aqueuse selon l'invention est totalement exempte d'huile non soluble dans l'eau.

### POLYALKYLENE GLYCOL

Comme indiqué précédemment, une composition lubrifiante aqueuse selon l'invention comprend de 0,1 à 15 % massique d'au moins un polyalkylène glycol.

Il est entendu qu'une composition lubrifiante selon l'invention peut comprendre un unique polyalkylène glycol, ou un mélange d'au moins deux polyalkylène glycols distincts, en particulier tels que décrits ci-après.

Les polyalkylène glycols (notés « PAG ») sont des homo- ou co-polymères constitués d'unités oxydes d'alkylène.

Selon l'invention, les polyalkylène glycols sont solubles dans l'eau.

Par « soluble dans l'eau » on entend désigner un polyalkylène glycol ayant une solubilité dans l'eau d'au moins 10 g/L, de préférence d'au moins 500 g/L, dans l'eau à température ambiante (environ 25 °C).

Les polyalkylène glycols peuvent être plus particulièrement formés d'unités oxyde d'alkylène en C₁-C₄, de préférence en C₁-C₃, plus particulièrement en C₂-C₃.

Avantageusement, un polyalkylène glycol mis en œuvre dans une composition lubrifiante aqueuse selon l'invention comprend au moins 50 % massique, d'unités oxyde de propylène et/ou oxyde d'éthylène.

Il peut s'agir d'un copolymère, en particulier statistique, comprenant des unités oxyde d'éthylène, oxyde de propylène et/ou oxyde de butylène. De préférence, il peut s'agir d'un copolymère, en particulier statistique, oxyde d'éthylène / oxyde de propylène.

De préférence, un polyalkylène glycol mis en œuvre dans une composition lubrifiante aqueuse selon l'invention présente une masse moléculaire moyenne en poids (Mw) comprise entre 100 et 25 000 g.mol⁻¹, de préférence entre 5 000 et 21 000 g.mol⁻¹

La masse molaire moyenne en nombre peut être mesurée par chromatographie à perméation de gel (GPC).

De préférence, un polyalkylène glycol mis en œuvre dans une composition lubrifiante aqueuse selon l'invention présente une viscosité cinématique mesurée à 100 °C (KV100), selon la norme ASTM D445, comprise entre 100 et 5 000 mm²/s, en particulier entre 150 et 3 000 mm²/s, par exemple entre 1500 et 3 000 mm²/s ou entre 100 et 250 mm²/s

De préférence, un polyalkylène glycol mis en œuvre dans une composition lubrifiante aqueuse selon l'invention présente une viscosité cinématique mesurée à 40°C (KV40), selon la norme ASTM D445, comprise entre 500 et 30 000 mm²/s, plus particulièrement entre 1 000 et 25 000 mm²/s, par exemple entre 10 000 et 25 000 mm²/s ou entre 500 et 2 500 mm²/s

Le point éclair d'un polyalkylène glycol mis en œuvre dans une composition lubrifiante aqueuse selon l'invention est de préférence supérieur ou égale à 160 °C, en particulier supérieur ou égale à 220 °C, par exemple compris entre 220 °C et 300 °C. Le point éclair peut être mesuré par la norme ISO 2592 ou ASTM D92.

De préférence, un polyalkylène glycol mis en œuvre dans une composition lubrifiante aqueuse selon l'invention présente un indice de viscosité mesuré selon la norme ASTM D2270, compris entre 100 et 800, de préférence entre 250 et 550.

De tels polyalkylène glycols peuvent être disponibles dans le commerce ou synthétisés selon des méthodes connues de l'homme du métier. Ils peuvent être obtenus par exemple par polymérisation ou copolymérisation d'oxydes d'alkylène ayant entre 2 et 4 atomes de carbones. Un exemple de synthèse est par exemple détaillé dans le document US 2012/0108482, par réaction entre un ou plusieurs alcools ayant entre 2 et 12 atomes de carbone, en particulier des polyols, tels que des diols, avec des oxydes d'alkylène, en particulier oxyde d'éthylène, oxyde de propylène et/ou oxyde de butylène. L'alcool peut être de préférence un diol, en particulier le 1,2-propanediol.

Comme mentionné ci-dessus, le ou lesdits composés polyalkylène glycol sont mis en œuvre dans une composition lubrifiante aqueuse selon l'invention en une teneur comprise entre 0,1 % et 15 % massique, plus préférentiellement entre 1 % et 10 % massique, en particulier entre 2 % et 5 % massique, par rapport à la masse totale la composition.

### POLYSACCHARIDE A GALACTOMANNANE

Comme indiqué précédemment, une composition lubrifiante aqueuse selon l'invention comprend de 0,1 à 5 % massique d'au moins un polysaccharide à galactomannane.

Les polysaccharides à galactomannanes sont des polysaccharides hétérogènes constitués d'unités de galactose et de mannose. Ces polyosides non ioniques peuvent être extraits de l'albumen de graines de légumineuses dont ils constituent le glucide de réserve.

Il s'agit plus particulièrement de macromolécules constituées d'une chaîne principale d'unités D-mannopyranose liées en β(1,4), portant des branchements latéraux constitués d'une seule unité D-galactopyranose liée en α(1,6) à la chaîne principale. Les différents galactomannanes se distinguent d'une part par la proportion d'unités α-D-galactopyranose présentes dans le polymère et, d'autre part, par des différences en termes de distribution des unités galactose le long de la chaine de mannose.

Le rapport mannose/galactose (M/G) est de l'ordre de 2 pour la gomme guar, de 3 pour la gomme tara et de 4 pour la gomme de caroube.

Les polysaccharides à galactomannane peuvent plus particulièrement présenter la structure chimique suivante : 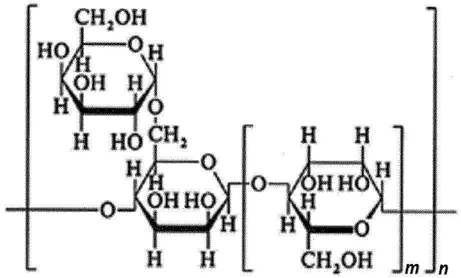 avec, par exemple, m valant 1 (gomme de guar), 2 (gomme de tara) ou 3 (gomme de caroube).

Les polysaccharides à galactomannane peuvent être en particulier choisis parmi la gomme de guar, la gomme de caroube, la gomme tara et leurs dérivés.

Par « dérivés », on entend plus particulièrement des gommes non-ioniques modifiées chimiquement, ou encore des gommes cationiques ou anioniques.

Selon un mode de réalisation particulier, une composition lubrifiante selon l'invention comprend au moins un polysaccharide à galactomannane de type gomme de guar. Par l'expression « de type gomme de guar », on entend désigner la gomme de guar et ses dérivés, en particulier choisis parmi les gommes de guar non-ioniques modifiées chimiquement, les gommes de guar cationiques ou anioniques.

Ainsi, selon un mode de réalisation préféré, une composition lubrifiante selon l'invention comprend au moins un polysaccharide à galactomannane de type gomme de guar choisi parmi la gomme de guar, les gommes de guar non-ioniques modifiées chimiquement, et les gommes de guar cationiques ou anioniques.

La gomme de guar est caractérisée par un ratio mannose:galactose de l'ordre de 2:1. Le groupement galactose est régulièrement distribué le long de la chaîne de mannose.

Il est entendu qu'une composition lubrifiante selon l'invention peut comprendre un unique polysaccharide à galactomannane, en particulier de type gomme de guar, ou encore un mélange d'au moins deux polysaccharides à galactomannane distincts, par exemple un mélange d'au moins deux polysaccharides à galactomannane choisis parmi la gomme de guar et ses dérivés.

Les polysaccharides à galactomannane de type gomme de guar peuvent être des gommes de guar non ioniques non modifiées ou chimiquement modifiées.

Les gommes de guar non-ioniques modifiées utilisables selon l'invention peuvent être plus particulièrement des gommes de guar modifiées par des groupements hydroxyalkyle en C₁-C₆, parmi lesquels, on peut mentionner à titre d'exemples, les groupements hydroxyméthyle, hydroxyéthyle, hydroxypropyle et hydroxybutyle. A titre d'exemple, une gomme de guar non-ionique, modifiée chimiquement, mise en œuvre dans une composition lubrifiante selon l'invention peut être l'hydroxypropyl guar.

Les polysaccharides à galactomannane, par exemple de type gomme de guar, peuvent également être des galactomannanes cationiques, en particulier présentant une densité de charge cationique inférieure ou égale à 1,5 meq/g et plus particulièrement comprise entre 0,1 et 1 meq/g. La densité de charge peut être déterminée selon la méthode Kjeldahl. Elle correspond en général à un pH de l'ordre de 3 à 9. De manière générale, un polysaccharide à galactomannane cationique comprend des groupements cationiques et/ou des groupements ionisables en groupements cationiques.

Les groupements cationiques préférés sont choisis parmi ceux comportant des groupements amines primaires, secondaires, tertiaires et/ou quaternaires.

Les polysaccharides à galactomannane cationiques ont généralement une masse moléculaire moyenne en poids comprise entre 500 et 5x10⁶ environ, et de préférence comprise entre 10³ et 3x10⁶ environ.

Il peut s'agir par exemple d'un polysaccharide à galactomannane comportant des groupements cationiques trialkyl(C₁- C₄) ammonium. De préférence, 2 % à 30 % en nombre des fonctions hydroxyles du polysaccharide à galactomannane sont porteurs des groupements cationiques trialkylammonium.

Parmi ces groupements trialkylammonium, on peut tout particulièrement citer les groupements triméthylammonium et triéthylammonium.

Encore plus préférentiellement, ces groupements représentent de 5 % à 20 % en poids du poids total du polysaccharide à galactomannane modifié.

Les polysaccharides à galactomannane de type gomme de guar peuvent ainsi être des gommes de guar cationiques, en particulier comportant des groupements hydroxypropyl triméthylammonium. Ils peuvent être par exemple obtenus par réaction de la gomme de guar avec du chlorure de 2,3-époxypropyl triméthylammonium.

A titre d'exemple, une gomme de guar cationique, mise en œuvre dans une composition lubrifiante selon l'invention peut être le chlorure d'hydroxypropyl trimonium de guar.

Les polysaccharides à galactomannane, par exemple de type gomme de guar, peuvent également être des galactomannanes anioniques. En particulier, il peut s'agir de polysaccharides à galactomannane comportant des groupements dérivés d'acide carboxylique, sulfonique, sulfénique, phosphorique, phosphonique ou acide pyruvique. De préférence, le groupement anionique est un groupement acide carboxylique. Le groupement anionique peut également se présenter sous forme d'un sel d'acide, notamment un sel de sodium, de calcium, de lithium ou de potassium.

Les polysaccharides à galactomannane de type gomme de guar peuvent ainsi être des gommes de guar carboxyméthylées, telles qu'une carboxyméthyl guar ou une carboxyméthyl hydroxypropyl guar.

A titre d'exemple, une gomme de guar anionique mise en œuvre dans une composition lubrifiante selon l'invention peut être la carboxyméthyl hydroxypropyl guar.

De préférence, le ou lesdits polysaccharides à galactomannane mis en œuvre dans une composition lubrifiante selon l'invention sont choisis parmi la gomme de guar, les dérivés de gomme de guar, et leurs mélanges, en particulier parmi la gomme de guar, l'hydroxypropyl guar, la carboxyméthyl hydroxypropyl guar, le chlorure d'hydroxypropyltrimonium de guar , et leurs mélanges.

Selon un mode de réalisation particulier, une composition lubrifiante selon l'invention met en œuvre, à titre de polysaccharide à galactomannane, au moins de l'hydroxypropyl guar.

Comme évoqué précédemment, le ou lesdits polysaccharide(s) à galactomannane, de préférence de type gomme de guar, sont mis en œuvre dans une composition lubrifiante aqueuse selon l'invention en une teneur comprise entre 0,1 % et 5 % massique, plus préférentiellement entre 0,1 % et 3,5 % massique, en particulier entre 0,2 % et 1 % massique, par rapport à la masse totale la composition.

### ADDITIFS

Une composition lubrifiante aqueuse selon l'invention peut comprendre en outre divers additifs.

Il est entendu que le ou lesdits additifs sont compatibles avec leur mise en œuvre en milieu aqueux. Avantageusement, les additifs sont mis en œuvre sous une forme soluble ou émulsionnable dans l'eau, par exemple sous la forme de sels ou de liquides ioniques.

Le ou lesdits additifs sont bien entendu choisis au regard de l'application visée pour le lubrifiant aqueux.

Bien entendu, l'homme du métier veillera à choisir les éventuels additifs et/ou leur quantité de telle manière que les propriétés avantageuses de la composition lubrifiante aqueuse selon l'invention, en particulier l'effet avantageux de réduction des résidus gommeux, postérieurement à la mise en œuvre de la composition lubrifiante pour le travail des métaux et les propriétés tribologiques, notamment des propriétés extrême-pression et protection des pièces contre l'usure, ne soient pas altérées par l'adjonction envisagée.

De tels additifs peuvent être plus particulièrement choisis parmi des agents anti-mousses, des biocides, des régulateurs de pH, des inhibiteurs de corrosion, des additifs anti-usure et/ou extrême-pression, des agents séquestrant, des agents passivant les métaux, des colorants, des dispersants, des agents émulsifiants, des agents mouillant, et leurs mélanges.

Avantageusement, une composition lubrifiante aqueuse selon l'invention peut comprendre un ou plusieurs additifs choisis parmi des agents anti-mousses, des biocides, des régulateurs de pH, des inhibiteurs de corrosion, des agents séquestrant, des agents passivant les métaux, des agents émulsifiants et leurs mélanges.

Une composition lubrifiante aqueuse selon l'invention peut comprendre plus particulièrement de 1 à 49,8 % massique d'additifs, en particulier de 5 à 40 % massique d'additifs, par rapport à la masse totale de la composition.

### Inhibiteur de corrosion

Une composition lubrifiante aqueuse selon l'invention peut comprendre au moins un agent inhibiteur de corrosion. Les inhibiteurs de corrosion permettent avantageusement de réduire voire d'empêcher la corrosion des pièces métalliques. La nature du ou desdits inhibiteurs de corrosion peut être choisie au regard du métal à protéger contre la corrosion, tel que l'aluminium, l'acier, l'acier galvanisé, les métaux jaunes, par exemple le cuivre ou le laiton. Parmi les inhibiteurs de corrosion inorganiques peuvent être cités les nitrites, les sulfites, les silicates, les borates, les phosphates de sodium, potassium, calcium ou magnésium, les phosphates de métaux alcalins, les hydroxydes, les molybdates, les sulfates de zinc, de magnésium ou de nickel.

Parmi les inhibiteurs de corrosion organiques peuvent être cités les acides aliphatiques monocarboxyliques, en particulier ayant de 4 à 15 atomes de carbone, par exemple l'acide octanoïque, les acides aliphatiques dicarboxyliques ayant de 4 à 15 atomes de carbone, par exemple l'acide décane dioïque (acide sébacique), l'acide undécane dioïque, l'acide dodécane dioïque, l'acide isononanoïque ou leurs mélanges, les acides polycarboxyliques éventuellement neutralisés par la triéthanolamine, tel que l'acide 1,3,5-triazine-2,4,6-tri-(6-aminocaproïque), les acides alcanoylamidocarboxyliques, en particulier l'acide isononanoylamidocaproïque, l' Acide 6-[[(4-méthylphényl)sulfonyl]amino]hexanoïque, et leurs mélanges. Les amides boratés, produits de la réaction d'amines ou d'amino-alcools avec de l'acide borique, peuvent également être utilisés.

Une composition lubrifiante aqueuse selon l'invention peut notamment comprendre de 0,01 % à 15 % massique d'inhibiteur(s) de corrosion, de préférence de 1,0 % à 13 % massique, par rapport à la masse totale de la composition.

### Additif anti-usure/extrême-pression

Une composition lubrifiante aqueuse selon l'invention peut comprendre au moins un additif anti-usure et/ou extrême-pression. Leur fonction est de réduire l'usure et le coefficient de friction, ou encore d'empêcher le contact métal-métal par formation d'un film protecteur adsorbé sur ces surfaces.

Une composition lubrifiante aqueuse selon l'invention peut comprendre entre 0,001 % et 50 % massique d'additif(s) anti-usure et/ou extrême-pression, en particulier d'acide(s) gras soufré(s), tels que définis ci-dessus, de préférence entre 0,2% et 5% massique, par rapport à la masse totale de la composition.

De manière avantageuse, une composition selon l'invention, associant au moins un polyalkylène glycol et au moins un polysaccharide à galactomannane, en particulier de type gomme de guar, présente de bonnes propriétés anti-usure et extrême-pression, même en l'absence d'additifs anti-usure et/ou extrême-pression annexes.

Ainsi, selon un mode de réalisation particulier, une composition lubrifiante selon l'invention comprend moins de 1 % massique d'additifs anti-usure et/ou extrême-pression, en particulier moins de 0,5 % massique, notamment moins de 0,1 % massique d'additifs anti-usure et/ou extrême-pression, voire est exempte d'additif anti-usure et/ou extrême-pression.

### Anti-mousse

Une composition lubrifiante aqueuse selon l'invention peut comprendre au moins un additif anti-mousse. Les antimousses permettent d'empêcher le moussage du fluide lubrifiant.

Il peut s'agir par exemple d'un agent anti-mousse à base de polysiloxanes ou de polymères acrylates. De préférence, l'agent anti-mousse est choisi parmi les siloxanes tridimensionnelles.

Également, les agents anti-mousses peuvent être des polymères polaires tels que les polyméthylsiloxanes ou les polyacrylates.

En particulier, une composition lubrifiante aqueuse selon l'invention peut comprendre de 0,001 % à 3,0 % massique d'additif(s) anti-mousse, de préférence de 0,005 % à 1,5 % massique, par rapport à la masse totale de la composition lubrifiante.

### Régulateur de pH

Une composition lubrifiante aqueuse selon l'invention peut comprendre au moins un additif régulateur de pH, en particulier un tampon alcalin. Le régulateur de pH permet de maintenir le pH souhaité de la composition lubrifiante, en particulier afin de préserver un pH alcalin, avantageusement compris entre 8 et 11, de manière notamment à prévenir une corrosion des surfaces métalliques.

Le régulateur de pH peut être choisi dans la famille des amines, en particulier des alcanolamines et des alcools aminés.

Il peut s'agir notamment d'un additif régulateur de pH choisi parmi les éthanolamines, telles que la monoéthanolamine (MEA), la diéthanolamine (DEA) ; la triéthanolamine (TEA), la diglycolamine (DGA) les isopropanolamines, telles que la mono-isopropanolamine (MIPA), la diisopropanolamine (DIPA) et la triisopropanolamine (TIPA), les éthylène amines, telles que l'éthylène diamine (EDA), la diéthylène triamine (DETA), la triéthylène tétramine (TETA) et la tétraéthylène pentamine (TEPA), les alcanolamines, telle que la méthyldiéthanol amine (MDEA), les cyclamines, tels que la cyclohexylamine, le 2-amino-2-éthyle-1,3-propanediol, le 2-amino-2-méthyle-1-propanol et leurs mélanges.

Une composition lubrifiante aqueuse selon l'invention peut notamment comprendre de 1 % à 25 % massique d'additif(s) régulateur(s) de pH, de préférence de 5 % à 20 % massique, par rapport à la masse totale de la composition.

### Agents passivant les métaux

Une composition lubrifiante aqueuse selon l'invention peut comprendre au moins un agent passivant les métaux. Les agents passivant les métaux permettent de protéger les pièces métalliques en favorisant la formation d'oxyde métallique à leur surface.

Les agents passivant les métaux peuvent être par exemple choisis parmi des dérivés du triazole, tels que le tétrahydrobenzotriazole (THBTZ), le tolyltryazole (TTZ), le benzotriazole (BTZ), les amines substituées par un groupe triazole, tels que la N,N-bis(2-éthylhexyl)-1,2,4-triazol-1-yl méthanamine, la N'-bis(2 éthylhexyl)-4-méthyl-1H-benzotriazol-1-méthyl-amine, la N,N-bis(heptyl)-ar-methyl-1H-benzotriazole-1-méthanamine, N,N-bis(nonyl)-ar-methyl-1H-benzotriazole-1-méthanamine, N,N-bis(décyl)-ar-méthyl-1H-benzotriazole-1-méthanamine, N,N-bis(undécyl)-ar-méthyl-1H-benzotriazole-1-méthanamine, N,N-bis(dodécyl)-ar-méthyl-1H-benzotriazole-1-méthanamine, N,N-bis(2-éthylhexyl)-ar-méthyl-1H-benzotriazole-1-méthanamine, les 1,2,4-triazoles, les benzimidazoles, les 2-alkyldithiobenzimidazoles, les 2-alkyldithiobenzothiazoles, les 2-(N, N-dialkyldithiocarbamoyl)benzothiazoles, les 2,5-bis(alkyldithio)-1,3,4-thiadiazoles, tels que le 2,5-bis(tert-octyldithio)-1,3,4-thiadiazole, le 2,5-bis(tert-nonyldithio)-1,3,4-thiadiazole, le 2,5-bis(tert-decyldithio)-1,3,4-thiadiazole, le 2,5-bis(tert-undecyldithio)-1,3,4-thiadiazole, le 2,5-bis(tert-dodecyldithio)-1,3,4-thiadiazole, le 2,5-bis(tert-tridecyldithio)-1,3,4-thiadiazole, le 2,5-bis(tert-tetradecyldithio)-1,3,4-thiadiazole, le 2,5-bis(tert-pentadecyldithio)-1,3,4-thiadiazole, le 2,5-bis(tert-hexadecyldithio)-1,3,4-thiadiazole, le 2,5-bis(tert-heptadecyldithio)-1,3,4-thiadiazole, le 2,5-bis(tert-octadecyldithio)-1,3,4-thiadiazole, le 2,5-bis(tert-nonadecyldithio)-1,3,4-thiadiazole, le 2,5-bis(tert-eicosyldithio)-1,3,4-thiadiazole, les 2,5-bis(N,N-dialkyldithiocarbamoyl)-1,3,4-thiadiazoles, les 2-alkyldithio-5-mercaptothiadiazoles, et leurs mélanges.

De préférence les agents passivant les métaux sont choisis parmi le tétrahydrobenzotriazole (THBTZ), le tolyltriazole (TTZ), le benzotriazole (BTZ), et leurs sels, pris seuls ou en mélanges.

Une composition lubrifiante aqueuse selon l'invention peut notamment comprendre de 0,01 % à 2,0 % massique d'agent(s) passivant les métaux, de préférence de 0,1 % à 1,0 % massique, plus préférentiellement de 0,2 % à 0,8 % massique, par rapport à la masse totale de la composition.

### Colorants

Une composition lubrifiante aqueuse selon l'invention peut comprendre un ou plusieurs colorants. Les colorants peuvent être naturels ou synthétiques, généralement organiques. Les colorants pouvant être mis en œuvre dans une composition lubrifiante aqueuse peuvent être plus particulièrement choisis parmi des colorants hydrosolubles naturels ou synthétiques, par exemple les colorants FDC Red 4, DC Red 6, DC Red 22, DC Red 28, DC Red 30, DC Red 33, DC Orange 4, DC Yellow 5, DC Yellow 6, DC Yellow 8, FDC Green 3, DC Green 5, FDC Blue 1, la bétanine (betterave), le carmin, une chlorophylline, le bleu de méthylène, les anthocyanes (enocianine, carotte noire et hibiscus), le caramel et la riboflavine.

Une composition lubrifiante aqueuse selon l'invention peut comprendre entre 0,01 % et 2,0 % massique de colorant(s), de préférence entre 0,01 % et 1,5 % massique, plus préférentiellement entre 0,02 % et 1,0 % massique, par rapport à la masse totale de la composition.

### Agents émulsifiants

Une composition lubrifiante aqueuse selon l'invention peut comprendre un ou plusieurs agents émulsifiants, également appelés émulgateurs. Leur fonction est de générer des émulsions stables dans l'eau.

Les agents émulsifiants peuvent être plus particulièrement non ioniques, comme par exemple des alcools gras éthoxylés, des acides gras éthoxylés, les composés issus de la réaction entre l'oxyde de propylène, l'éthylènediamine et éventuellement l'oxyde d'éthylène, des amides gras éthoxylés ; anioniques, par exemple des savons de KOH, de NaOH ; des sulphonates ; cationiques, tels que des composés ammonium quaternaire ; ou encore des esters d'acide carboxylique solubles ou émulsionnables dans l'eau.

En particulier, une composition lubrifiante aqueuse selon l'invention peut comprendre de 0,01 % à 10 % massique d'agent(s) émulsifiant, de préférence de 0,1 % à 5,0 % massique, par rapport à la masse totale de la composition lubrifiante.

### Agents séquestrant

Une composition lubrifiante aqueuse selon l'invention peut comprendre au moins un agent séquestrant. Les agents séquestrant, encore appelés agents chélatant, permettent de limiter l'incrustation d'ion métalliques dans la composition.

A titre d'exemples d'agents séquestrant, on peut citer ceux dérivés d'acides phosphoniques et des phosphonates, tels que l'acide diéthylènetriaminepentaméthyle phosphonique (DTPMPA), l'acide amino tri(méthylène phosphonique) (ATMP), l'acide hydroxyéthane-diphosphonique (HEDP), le 1,1-diphosphonate de 1-hydroxyléthylidène, l'acide de 2-hydroxyéthylamine di(méthylène phosphonique) (HEAMBP), l'acide diéthylène triamino penta(méthylène phosphonique) (DTMP), les acides organiques multifonctionnels et les acide hydroxylés, tels que l'acide éthylène diamine tétra-acétique (EDTA), l'acide pteroyl-L-glutamique (PGLU), les polyacides organiques, tels que l'acide maléique et l'acide polyaspartique, les polysaccharides distinct des polysaccharides à galactomannanes définis ci-dessus et les carbohydrates, tels que l'inuline, la carboxyméthylinuline et le carboxyméthylchitosane.

Une composition lubrifiante aqueuse selon l'invention peut comprendre de 0,001% à 2,0 % massique d'agent(s) séquestrant(s), de préférence de 0,01 % à 1,0 % massique, par rapport à la masse totale de la composition.

### Biocides

Une composition lubrifiante aqueuse selon l'invention peut comprendre au moins un agent biocide à action fongicide et/ou bactéricide. Les biocides peuvent être utilisés pour améliorer la stabilité biologique de la composition en limitant la prolifération des bactéries, champignons et levures dans le fluide lubrifiant.

De tels biocides peuvent être choisis parmi les parabènes, les aldéhydes, les composés acétylacétone réactifs, les isothiazolinones, les composés phénoliques, les sels d'acides, les composés halogénés, les ammoniums quaternaires, certains alcools et leurs mélanges.

De préférence, les biocides peuvent être choisis parmi les benzisothiazolinones (BIT) éventuellement substituées, telle que la N-butyl-1,2-benzisothiazolin-3-one, les méthylisothiazolinones (MIT), les mélanges de méthylisothiazolinone et de chlorométhylisothiazolinone (MIT/CMIT), l'orthophényl-phénol (OPP) ou son sel de sodium, le 3-iodo-2-propynylbutylcarbamate (IPBC), le chloro-crésol et la N,N-méthylène-bis-morpholine (MBM) ; l'acide sorbique ; de préférence parmi l'orthophényl-phénol (OPP) ou son sel sodium, le 3-iodo-2-propynylbutylcarbamate, le chloro-cresol, les benzisothiazolinones et la N,N-méthylène-isomorpholine.

Une composition lubrifiante aqueuse selon l'invention peut notamment comprendre entre 0,01 % et 10 % massique de biocide(s), de préférence entre 0,1 % et 5,0 % massique, par rapport à la masse totale de la composition.

Selon un mode de réalisation particulier, une composition lubrifiante aqueuse selon l'invention comprend :
- au moins 50 % massique d'eau, de préférence d'eau osmosée ;
- de 0,1 % à 15 % massique d'au moins un polyalkylène glycol soluble dans l'eau, en particulier tel que défini précédemment ;
- de 0,1 % à 5 % massique d'au moins un polysaccharide à galactomannane, de préférence choisi parmi la gomme de guar et ses dérivés, en particulier l'hydroxypropyl guar ; et
- éventuellement de 1 % à 50 % massique, en particulier de 5 à 40 % massique, d'un ou plusieurs additifs choisis parmi des agents anti-mousses, des biocides, des régulateurs de pH, des inhibiteurs de corrosion, des agents séquestrant, des agents passivant les métaux, des agents émulsifiants, et leurs mélanges,
les teneurs étant exprimées par rapport à la masse totale de la composition lubrifiante.

En particulier, une composition lubrifiante aqueuse selon l'invention peut consister en :
- de 0,1 % à 15 % massique d'au moins un polyalkylène glycol soluble dans l'eau, en particulier tel que défini précédemment ;
- de 0,1 % à 5 % massique d'au moins un polysaccharide à galactomannane, de préférence choisi parmi la gomme de guar et ses dérivés, en particulier l'hydroxypropyl guar ; et
- éventuellement de 1 % à 50 % massique, en particulier de 5 à 40 % massique, d'un ou plusieurs additifs choisis parmi des agents anti-mousses, des biocides, des régulateurs de pH, des inhibiteurs de corrosion, des agents séquestrant, des agents passivant les métaux, des agents émulsifiants, et leurs mélanges,
les teneurs étant exprimées par rapport à la masse totale de la composition lubrifiante, et le reste étant constitué d'eau, de préférence d'eau osmosée.

Selon l'invention, les caractéristiques particulières, avantageuses ou préférées de la composition selon l'invention, permettent de définir des utilisations selon l'invention qui sont également particulières, avantageuses ou préférées.

L'invention va maintenant être décrite au moyen des exemples suivants donnés bien entendu à titre illustratif et non limitatif de l'invention.

### Exemple

### Evaluation des propriétés tribologiques

Les propriétés extrême-pression et anti-usure des compositions lubrifiantes sont évaluées par le test 4 billes selon la norme ASTM D2783 adaptée avec les paramètres suivants :
- vitesse proche de 1500 tours/minute,
- température ambiante, soit environ 20°C,
- durée de charge de 1 minute.

La mesure d'extrême-pression est réalisée par rotation d'une bille en acier inoxydable sur trois billes également en acier inoxydable maintenues immobiles, les 4 billes étant entièrement recouvertes d'un film de lubrifiant. Une charge est appliquée sur les billes et augmentée graduellement (toutes les minutes selon les paramètres ci-dessus) jusqu'à ce que les billes se soudent entre elles. Les billes sont changées avant chaque augmentation de la charge.

Le pouvoir extrême-pression correspond à la valeur de la charge à partir de laquelle les 4 billes se soudent, empêchant la rotation de la bille supérieure sur les 3 autres. Plus la charge est importante, plus le pouvoir extrême-pression est élevé.

Cette méthode permet également d'évaluer les propriétés anti-usure d'une composition lubrifiante. Pendant l'augmentation graduelle de charge, il est possible de déterminer, à chaque pallier, le diamètre d'usure sur les 3 billes. Plus le diamètre d'usure est faible, plus le lubrifiant est efficace pour prévenir l'usure (ou grippage) des pièces.

Les valeurs de diamètre d'usure fournies dans les exemples qui suivent sont celles obtenues pour la valeur de charge précédent la soudure des billes.

Il est courant de diluer les compositions avant la réalisation des essais de charge, et le taux de dilution est donc précisé dans les résultats ci-dessous.

### Mesure de la formation de résidu gommeux

L'essai d'évaluation de la formation des résidus gommeux est repris de la norme ISO/TS 12-927 partie B.6, pour laquelle les paramètres de temps et de température ont été adaptés.

Cette norme permet de simuler l'aspect collant gommeux résiduel d'un produit. Ainsi, cet essai permet d'évaluer si un produit restant sur la machine à l'arrêt après usinage, par exemple laissé à l'air libre, aura tendance à provoquer un phénomène de blocage au redémarrage, dû à la présence des résidus séchés collant sur l'outillage.

La formation des résidus gommeux est quantifiée par mesure de la masse de résidus non solubles dans l'eau après utilisation de la composition.

Pour ce faire, la composition à tester est placée dans une étuve ventilée à une température de 90°C pendant 20 heures. La masse de composition est mesurée avant et après passage dans l'étuve.

La composition est ensuite solubilisée dans de l'eau osmosée pendant 15 minutes à température ambiante et sous agitation mécanique à une vitesse de 600 tours/minute. Les résidus non solubles correspondent aux résidus gommeux formés. Ces derniers sont filtrés et pesés pour en déterminer la quantité en milligramme. Plus la quantité de résidus est importante, plus cela signifie que la composition lubrifiante aura tendance à former des résidus gommeux indésirables, après son utilisation comme lubrifiant dans des machines d'usinage.

### Exemple 1 : Préparation des compositions lubrifiantes

Une composition lubrifiante aqueuse selon l'invention (**I1**) et une composition lubrifiante aqueuse comparative (**C1**), ne comprenant pas de polysaccharide à galactomannane, ont été formulées selon le protocole ci-dessous, dans les pourcentages massiques indiqués dans le tableau 1 suivant.

Le protocole de formulation est le suivant :
Le polysaccharide à galactomannane est solubilisé dans de l'eau osmosée. La solution est agitée pendant 30 minutes à température ambiante (avoisinant les 20°C). A ce stade, la solution peut ne pas être limpide.

Puis, les autres composants sont ajoutés comme suit : introduction du ou des additifs régulateurs de pH, puis du ou des additifs inhibiteurs de corrosion en chauffant le mélange à une température de 40 à 50 °C. La solution est agitée à l'aide d'un barreau aimanté pendant une durée allant de 1 heure à 1 heure 30. Les composés suivants sont ensuite ajoutés, séquentiellement toutes les 5 minutes, dans l'ordre suivant et toujours sous agitation : passivateur(s), agent(s) séquestrant, PAG, puis éventuellement agent(s) mouillant, agent(s) antimousse et biocide(s).

Enfin, on procède à une agitation finale d'une durée de 1 heure.

**[Tableau 1]**

| Composition | **I1 selon l'invention** | **C1 comparative** |
|---|---|---|
| Eau osmosée [%] | 67,61 | 68,01 |
| Polyalkylène glycol 1 [%] | 3 | 3 |
| Hydroxypropyl guar [%] | 0,40 | - |
| Additif(s)⁽¹⁾ | 28,99 | 28,99 |

| | | |
|---|---|---|
| ⁽¹⁾ Le ou les additifs sont choisis parmi les anti-corrosion, les passivateurs, les agents séquestrants, les régulateurs de pH, les anti-mousse et les biocides. | | |

### Exemple 2 : Caractérisation des compositions selon l'invention et comparative

Les propriétés tribologiques ont été mesurées pour chaque composition, comme détaillé dans le protocole ci-dessus.

Les résultats sont compilés dans le tableau 2 ci-dessous.

**[Tableau 2]**

| Composition | Taux de dilution [%] | Charge de soudure [kg] | Diamètre d'usure [mm] |
|---|---|---|---|
| I1 (invention) | 10 | 180 | 1,3 - 1,4 |
| C1 (comparative) | 10 | 180 | 1,9 - 2,0 |

La composition I1 selon l'invention présente une charge à la soudure équivalente à celle obtenue pour la composition comparative, et un diamètre d'usure significativement inférieur. Ainsi, les compositions lubrifiantes conformes à l'invention, incorporant au moins un polysaccharide à galactomannane, telle qu'une gomme de guar, en combinaison avec au moins un polyalkylène glycol, présentent d'excellentes propriétés extrême-pression et anti-usure, équivalentes, voire même améliorées, comparativement à celles obtenues avec une composition ne mettant pas en œuvre de polysaccharide à galactomannane.

Par ailleurs, les résidus gommeux ont été quantifiés pour chacune des compositions, et les résultats sont fournis dans le tableau 3 ci-dessous.

**[Tableau 3]**

| Composition | Variation de masse après passage en étuve [%] | Masse insoluble dans l'eau [mg] |
|---|---|---|
| I1 (invention) | 98,6 | 6,4 |
| C1 (comparative) | 98,8 | 14,3 |

La composition I1 selon l'invention présente une masse en composés insolubles, correspondant aux résidus gommeux, significativement réduite comparativement à celle obtenue pour la composition C1.

Ainsi, les compositions lubrifiantes conforme à l'invention, incorporant au moins un polysaccharide à galactomannane, telle qu'une gomme de guar, en combinaison avec au moins un polyalkylène glycol, permettent avantageusement de conduire à de faibles quantités de résidus gommeux après leur utilisation au niveau de l'appareillage d'usinage.

### Exemple 3 : Préparation de compositions selon l'invention

Deux compositions lubrifiantes aqueuses selon l'invention (**I3, I4**), ont été formulées selon le même protocole de formulation que celui décrit à l'exemple 1, avec les pourcentages massiques indiqués dans le tableau 4 suivant.

**[Tableau 4]**

| Composition | **I2 selon l'invention** | **13 selon l'invention** |
|---|---|---|
| Eau osmosée [%] | 67,61 | 67,61 |
| Polyalkylèneglycol 2 [%] | 3 | 3 |
| Hydroxypropyl guar [%] | 0,40 | - |
| Hydroxypropyl guar et chlorure d'hydroxypropyl trimonium de guar [%] | - | 0,40 |
| Additif(s)⁽¹⁾ | 28,99 | 28,99 |

| | | |
|---|---|---|
| ⁽¹⁾ Le ou les additifs sont choisis parmi les anti-corrosion, les passivateurs, les agents séquestrants, les régulateurs de pH, les anti-mousse et les biocides. | | |

### Exemple 4 : Caractérisation des compositions selon l'invention

Les propriétés tribologiques ont été mesurées pour chaque composition, comme détaillé dans le protocole ci-dessus.

Les résultats sont compilés dans le tableau 5 ci-dessous.

**[Tableau 5]**

| Composition | Taux de dilution [%] | Charge de soudure [kg] | Diamètre d'usure [mm] |
|---|---|---|---|
| I2 (invention) | 10 | 200 | 1,7 - 1,8 |
| I3 (invention) | 10 | 180 | 1,3 - 1,4 |

Les compositions I2 et I3 conformes à l'invention présentent d'excellentes propriétés tribologiques.

Par ailleurs, les résidus gommeux ont été quantifiés pour chaque composition, et les résultats sont fournis dans le tableau 6 ci-dessous.

**[Tableau 6]**

| Composition | Variation de masse après passage en étuve [%] | Masse insoluble dans l'eau [mg] |
|---|---|---|
| 12 (Invention) | 99,0 | 9,9 |
| 13 (Invention) | 99,0 | 7,4 |

Les compositions I2 et I3, conformes à l'invention, forment de faibles quantités de résidus gommeux après utilisation.

## Revendications

1. Composition lubrifiante aqueuse, en particulier pour le travail des métaux, comprenant au moins :
- de l'eau, de préférence osmosée ;
- de 0,1 % à 15 % massique d'au moins un polyalkylène glycol soluble dans l'eau ; et
- de 0,1 % à 5 % massique d'au moins un polysaccharide à galactomannane,
les pourcentages étant exprimés par rapport à la masse totale de la composition, ladite composition comprenant entre 60 % et 75 % massique d'eau, par rapport à la masse totale de la composition.

2. Composition lubrifiante aqueuse selon la revendication 1, dans laquelle le ou lesdits polyalkylène glycols sont choisis parmi les copolymères, en particulier statistiques, comprenant des unités oxyde d'éthylène, oxyde de propylène et/ou oxyde de butylène.

3. Composition lubrifiante aqueuse selon l'une quelconque des revendications précédentes, comprenant de 1 % à 10 % massique de polyalkylène glycol(s), en particulier de 2 % à 5 % massique, par rapport à la masse totale la composition.

4. Composition lubrifiante aqueuse selon l'une quelconque des revendications précédentes, dans laquelle le ou lesdits polysaccharide(s) à galactomannane sont choisis parmi la gomme de guar, l'hydroxypropyl guar, la carboxyméthyl hydroxypropyl guar, le chlorure d'hydroxypropyltrimonium de guar et leurs mélanges, et plus particulièrement l'hydroxypropyl guar.

5. Composition lubrifiante aqueuse selon l'une quelconque des revendications précédentes, comprenant de 0,1 % à 3,5 % massique de polysaccharide(s) à galactomannane, et plus particulièrement de 0,2 % à 1 % massique, par rapport à la masse totale la composition.

6. Composition lubrifiante aqueuse selon l'une quelconque des revendications précédentes, comprenant un ou plusieurs additifs choisis parmi des agents anti-mousses, des biocides, des régulateurs de pH, des inhibiteurs de corrosion, des additifs anti-usure et/ou extrême-pression, des agents séquestrant, des agents passivant les métaux, des colorants, des dispersants, des agents émulsifiants, des agents mouillant, et leurs mélanges, en particulier choisis parmi des agents anti-mousses, des biocides, des régulateurs de pH, des inhibiteurs de corrosion, des agents séquestrant, des agents passivant les métaux, des agents émulsifiants et leurs mélanges.

7. Utilisation d'une composition lubrifiante aqueuse telle que définie selon l'une quelconque des revendications précédentes à titre de lubrifiant dans un procédé de travail des métaux.

8. Utilisation d'une composition lubrifiante aqueuse telle que définie selon l'une quelconque des revendications 1 à 6, pour réduire, voire prévenir la formation de résidus gommeux après une opération d'usinage de métaux faisant intervenir ladite composition à titre de fluide lubrifiant.

9. Utilisation de la combinaison d'au moins un polyalkylène glycol soluble dans l'eau et d'au moins un polysaccharide à galactomannane, en particulier choisi parmi la gomme de guar et ses dérivés, dans une composition lubrifiante aqueuse, pour réduire sa propension à former des résidus gommeux après sa mise en œuvre comme lubrifiant pour le travail des métaux.

## Patentansprüche

1. Wässrige Schmiermittelzusammensetzung, insbesondere für die Metallbearbeitung, umfassend mindestens:
- Wasser, vorzugsweise Osmosewasser;
- 0,1 bis 15 Massen-% mindestens eines wasserlöslichen Polyalkylenglykols; und
- 0,1 bis 5 Massen-% mindestens eines Galactomannan-Polysaccharids,
wobei die Prozentsätze auf die Gesamtmasse der Zusammensetzung bezogen ausgedrückt sind, wobei die Zusammensetzung zwischen 60 und 75 Massen-% Wasser, bezogen auf die Gesamtmasse der Zusammensetzung, umfasst.

2. Wässrige Schmiermittelzusammensetzung nach Anspruch 1, wobei das Polyalkylenglykol bzw. die Polyalkylenglykole aus Copolymeren, insbesondere statistischen Copolymeren, die Ethylenoxid-, Propylenoxid- und/oder Butylenoxid-Einheiten umfassen, ausgewählt ist bzw. sind.

3. Wässrige Schmiermittelzusammensetzung nach einem der vorhergehenden Ansprüche, umfassend 1 bis 10 Massen-% Polyalkylenglykol(e), insbesondere 2 bis 5 Massen-%, bezogen auf die Gesamtmasse der Zusammensetzung.

4. Wässrige Schmiermittelzusammensetzung nach einem der vorhergehenden Ansprüche, wobei das Galactomannan-Polysaccharid bzw. die Galactomannan-Polysaccharide aus Guar-Gummi, Hydroxypropylguar, Carboxymethylhydroxypropylguar, Guarhydroxypropyltrimoniumchlorid und Mischungen davon, insbesondere Hydroxypropylguar, ausgewählt ist bzw. sind.

5. Wässrige Schmiermittelzusammensetzung nach einem der vorhergehenden Ansprüche, umfassend 0,1 bis 3,5 Massen-% Galactomannan-Polysaccharid(e) und spezieller 0,2 bis 1 Massen-%, bezogen auf die Gesamtmasse der Zusammensetzung.

6. Wässrige Schmiermittelzusammensetzung nach einem der vorhergehenden Ansprüche, umfassend ein oder mehrere Additive, die aus Antischaummitteln, Bioziden, pH-Reglern, Korrosionsinhibitoren, Verschleißschutz- und/oder Höchstdruckadditiven, Sequestriermitteln, Metallpassivatoren, Farbstoffen, Dispergiermitteln, Emulgatoren, Netzmitteln und Mischungen davon ausgewählt sind und insbesondere aus Antischaummitteln, Bioziden, pH-Reglern, Korrosionsinhibitoren, Sequestriermitteln, Metallpassivatoren, Emulgatoren und Mischungen davon ausgewählt sind.

7. Verwendung einer wässrigen Schmiermittelzusammensetzung nach einem der vorhergehenden Ansprüche als Schmiermittel bei einem Metallbearbeitungsverfahren.

8. Verwendung einer wässrigen Schmiermittelzusammensetzung nach einem der Ansprüche 1 bis 6 zur Verringerung oder sogar Verhinderung der Bildung von gummiartigen Rückständen nach einem Metallbearbeitungsvorgang, bei dem die Zusammensetzung als Schmierflüssigkeit verwendet wird.

9. Verwendung der Kombination von mindestens einem wasserlöslichen Polyalkylenglykol und mindestens einem Galactomannan-Polysaccharid, das insbesondere aus Guar-Gummi und Derivaten davon ausgewählt ist, in einer wässrigen Schmiermittelzusammensetzung zur Verringerung von deren Neigung zur Bildung von gummiartigen Rückständen nach Verwendung als Schmiermittel für die Metallbearbeitung.

## Claims

1. Aqueous lubricant composition, in particular for metalworking, comprising at least:
- water, preferably osmosed water;
- from 0.1% to 15% by mass of at least one water-soluble polyalkylene glycol; and
- from 0.1% to 5% by mass of at least one galactomannan polysaccharide,
the percentages being expressed relative to the total mass of the composition, said composition comprising between 60% and 75% by mass of water, relative to the total mass of the composition.

2. Aqueous lubricant composition according to Claim 1, in which said polyalkylene glycol(s) are chosen from copolymers, in particular random copolymers, comprising ethylene oxide, propylene oxide and/or butylene oxide units.

3. Aqueous lubricant composition according to either one of the preceding claims, comprising from 1% to 10% by mass and in particular from 2% to 5% by mass of polyalkylene glycol(s), relative to the total mass of the composition.

4. Aqueous lubricant composition according to any one of the preceding claims, in which said galactomannan polysaccharide(s) are chosen from guar gum, hydroxypropyl guar, carboxymethyl hydroxypropyl guar, guar hydroxypropyl trimonium chloride and mixtures thereof, and more particularly hydroxypropyl guar.

5. Aqueous lubricant composition according to any one of the preceding claims, comprising from 0.1% to 3.5% by mass and more particularly from 0.2% to 1% by mass of galactomannan polysaccharide(s), relative to the total mass of the composition.

6. Aqueous lubricant composition according to any one of the preceding claims, comprising one or more additives chosen from antifoaming agents, biocides, pH regulators, corrosion inhibitors, antiwear and/or extreme-pressure additives, sequestrants, metal passivating agents, dyes, dispersants, emulsifying agents, wetting agents, and mixtures thereof, in particular chosen from antifoaming agents, biocides, pH regulators, corrosion inhibitors, sequestrants, metal passivating agents, emulsifying agents, and mixtures thereof.

7. Use of an aqueous lubricant composition as defined in any one of the preceding claims, as a lubricant in a metalworking process.

8. Use of an aqueous lubricant composition as defined in any one of Claims 1 to 6, for reducing or even preventing the formation of gummy residues after a metalworking operation using said composition as a lubricant fluid.

9. Use of the combination of at least one water-soluble polyalkylene glycol and at least one galactomannan polysaccharide, in particular chosen from guar gum and derivatives thereof, in an aqueous lubricant composition, to reduce its propensity to form gummy residues after its use as a metalworking lubricant.
